# EUROPEAN PATENT APPLICATION

(11) **EP 4 406 629 A1**
(43) Date of publication of application: **31.07.2024**
(21) Application number: 21958349.9
(22) Date of filing: 21.09.2021
(51) Int. Cl.: A63F 13/24, G06F 3/01, G06F 3/0338

(54) **INPUT DEVICE WITH VARIABLE GRIP**

(71) Applicant: Sony Interactive Entertainment Inc., Tokyo 108-0075 (JP)
(72) Inventor: TADANO, Katsuhisa, Fujisawa-shi, Kanagawa 251-0042 (JP); OKUYAMA, Isao, Tokyo 108-0075 (JP); IGARASHI, Takeshi, Tokyo 108-0075 (JP)
(74) Representative: D Young & Co LLP
(86) International application number: PCT/JP2021/034652
(87) International publication number: WO 2023/047472

(57) **Abstract**

A signal from a vibration motor is more easily transmitted to a hand of a user. A grip (30) includes a grip main body (31), a grip movable portion (32) constituting a right side surface (30b) of the grip (30), and a vibration motor (36) attached to the grip movable portion (32). A relative position between the grip main body (31) and the grip movable portion (32) is changeable in a lateral direction.

## Description

### [Technical Field]

The present disclosure relates to an input device including a grip held by a user.

### [Background Art]

As depicted in PTL 1, an input device including a vibration motor built into a grip is utilized to operate a game machine. The vibration motor is controlled to vibrate in response to an event or an action occurring in a game space. The user feels, in the hand, vibration caused by the vibration motor to feel the occurrence of the event or the action.

### [Citation List]

### [Patent Literature]

### [PTL 1]

U.S. Patent No. 6394906

### [Summary]

### [Technical Problem]

However, the vibration intensity transmitted to the hand of a user decreases depending on the manner of holding a grip. For example, when a gap is left between the grip and the palm, the vibration intensity transmitted to the hand of the user decreases.

### [Solution to Problem]

An input device proposed in the present disclosure includes a grip including side surfaces contacted by a palm of a user when the user holds the grip, and at least one operation member configured to be operated by the user with fingers. The grip includes a grip main body, a grip movable portion constituting a part of the side surfaces of the grip, and a vibration motor attached to the grip movable portion. A relative position between the grip movable portion and the grip main body is changeable.

### [Brief Description of Drawings]

[FIG. 1]

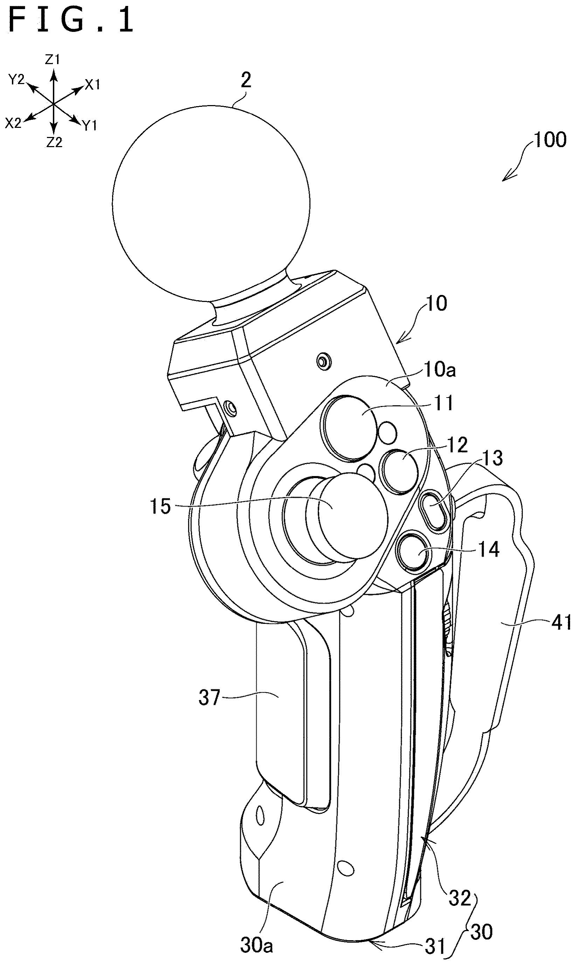

   FIG. 1 is a perspective view depicting an example of an input device proposed in the disclosure.
[FIG. 2]

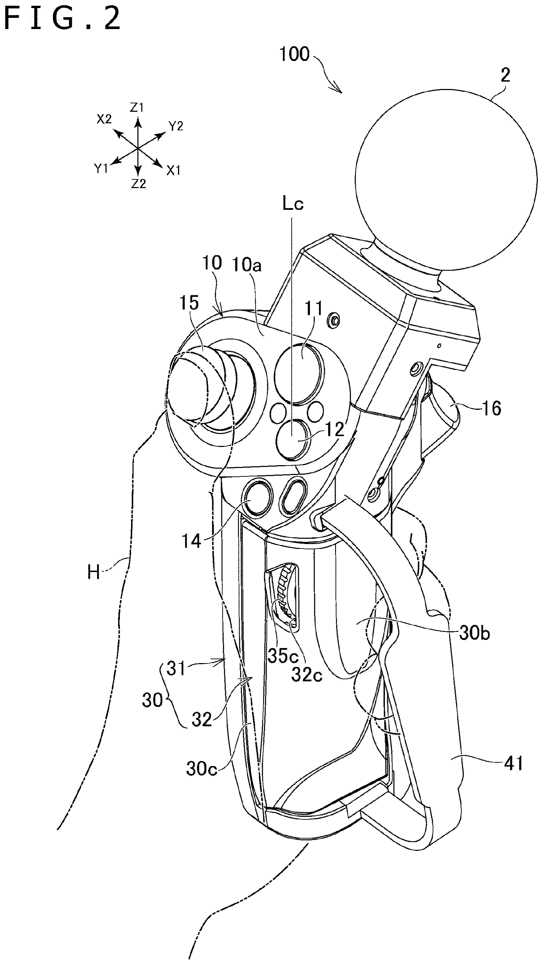

   FIG. 2 is a perspective view depicting an example of the input device.
[FIG. 3A]

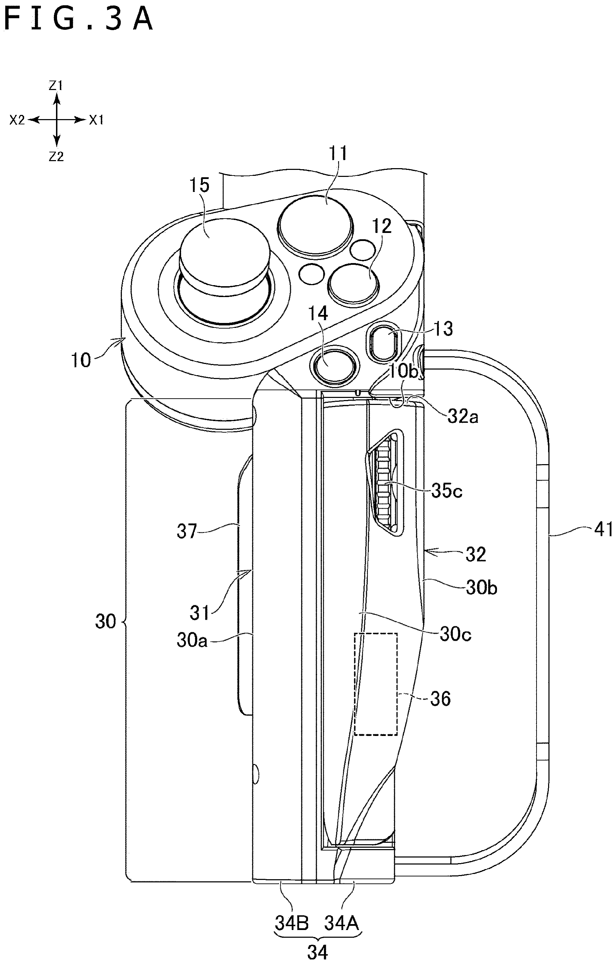

   FIG. 3A is a front view depicting a grip of the input device. In this figure, a grip movable portion is disposed in a reduced position.
[FIG. 3B]

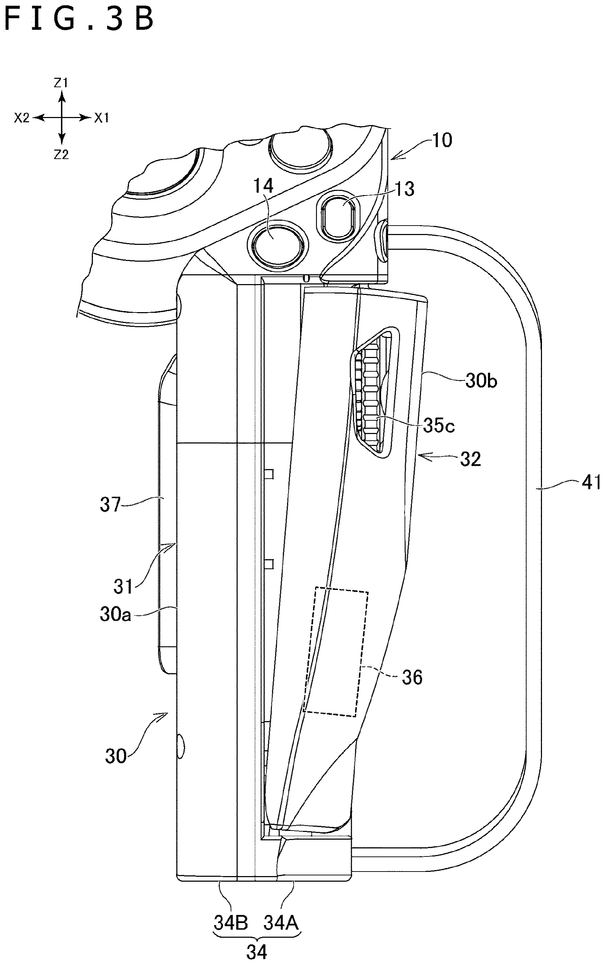

   FIG. 3B is a front view depicting the grip of the input device. In this figure, the grip movable portion is disposed in an enlarged position.
[FIG. 4]

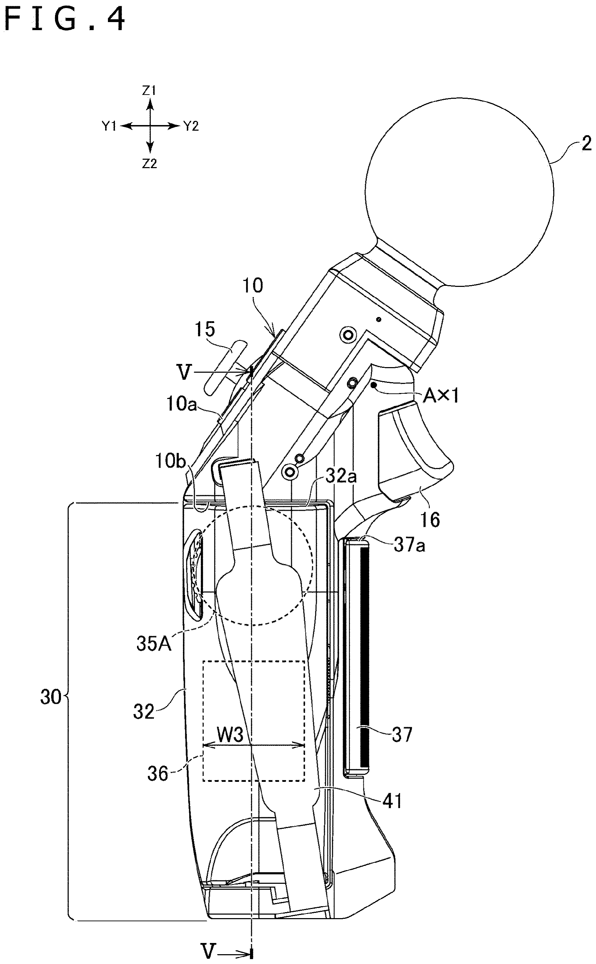

   FIG. 4 is a side view depicting an example of the input device.
[FIG. 5A]

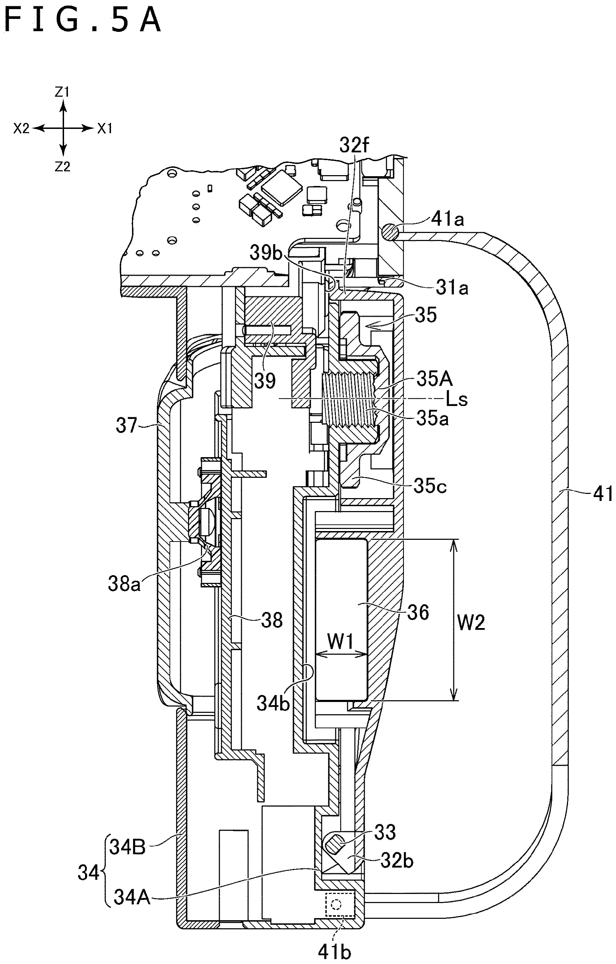

   FIG. 5A is a cross-sectional view taken along line V-V in FIG. 4. In this figure, the grip movable portion is disposed in a reduced position.
[FIG. 5B]

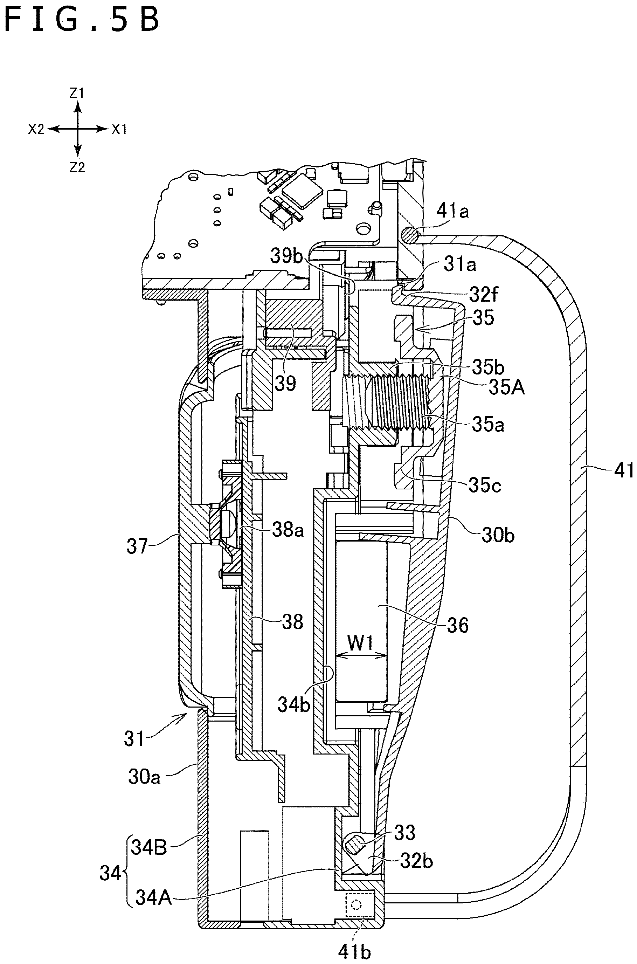

   FIG. 5B is a cross-sectional view taken along line V-V in FIG. 4. In this figure, the grip movable portion is disposed in an enlarged position.
[FIG. 6]

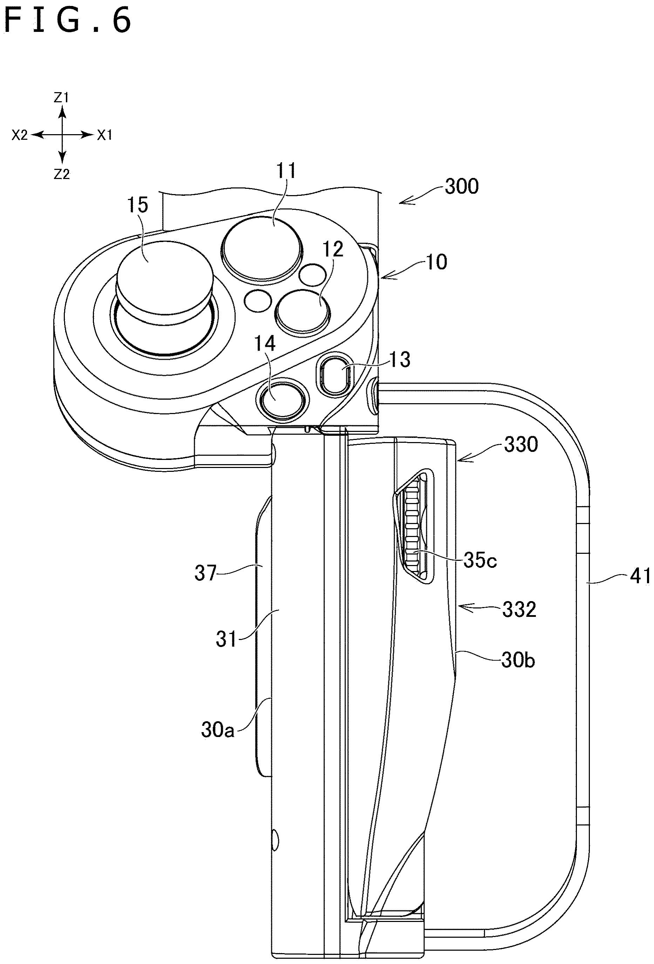

   FIG. 6 is a front view depicting another example of the input device.
[FIG. 7]

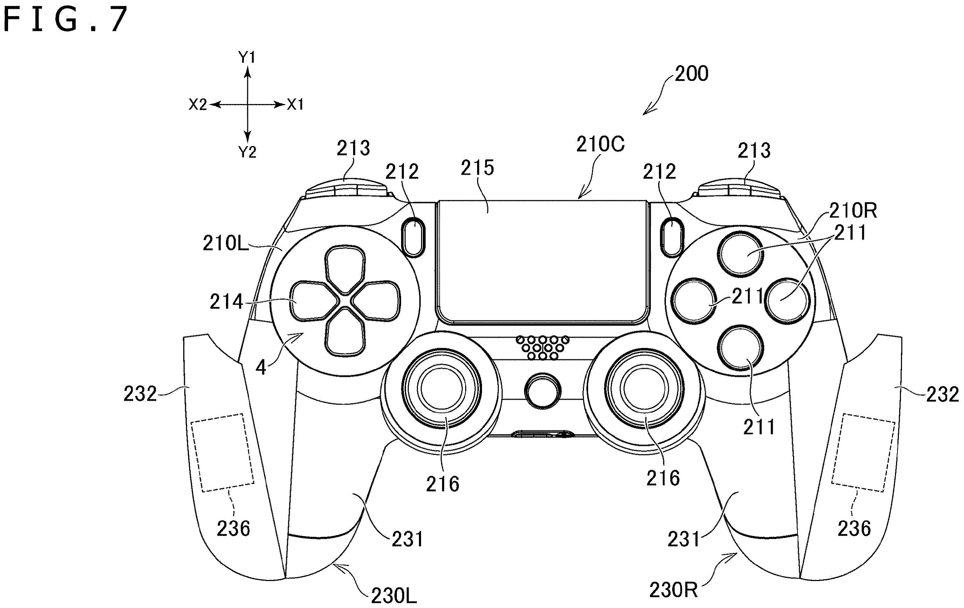

   FIG. 7 is a plan view depicting another example of the input device.

### [Description of Embodiment]

An input device proposed in the present disclosure will be described below. In the specification, as an example of the input device proposed in the present disclosure, an input device 100 will be described that is utilized to operate a game machine. Note that the present disclosure may be applied to an input device utilized to operate an information processing apparatus different from a game machine (for example, an input device utilized to operate a simulation apparatus, an input device utilized to operate a vehicle, a ship, an airplane, or the like).

Hereinafter, directions denoted by X1 and X2 in FIG. 1 are respectively referred to as right and left, and directions denoted by Y1 and Y2 in FIG. 1 are respectively referred to as front and back. Additionally, directions denoted by Z1 and Z2 are respectively referred to as up and down. These directions are used to describe relative positional relations among elements (components, members, and portions) of the input device 100 and are not intended to identify the orientation of the input device 100 during use.

### [Operation Member]

As depicted in FIG. 2, the input device 100 includes one grip 30 to be held in the hand of a user. The grip 30 is shaped like a stick extending in an up-down direction. The input device 100 includes a plurality of operation members to be operated by the user with fingers. The plurality of operation members is positioned above the grip 30. The input device 100 includes push buttons 11, 12, 13, and 14 as examples of the plurality of operation members. Additionally, the input device 100 includes an operation stick 15 as an example of the operation member. The operation stick 15 can be tilted in a radial direction thereof or rotated while being tilted. The operation stick 15 is positioned to the left of the push buttons 11 to 14 and protrudes leftward from a left side surface 30a of the grip 30. Furthermore, the input device 100 includes a trigger button 16 (see FIG. 4). The input device 100 includes an operation section 10 positioned above the grip 30. The push buttons 11, 12, 13, and 14 and the operation stick 15 are provided on a front surface 10a of the operation section 10. The trigger button 16 is provided opposite to the push buttons 11, 12, 13, and 14 (that is, behind the operation section 10). The trigger button 16 can move around a center line Ax1 (see FIG. 4) extending in a lateral direction. The user operates the operation members with the finger while holding the grip 30. Specifically, the user operates the push buttons 11, 12, 13, and 14 and the operation stick 15 with the thumb. Additionally, the user operates the trigger button 16 with the index finger. The input device 100 transmits signals corresponding to operations of the buttons 11 to 16, to a gaming apparatus in a wireless or wired manner. (In the following description, when not distinguished from one another, the above-described operation buttons 11 to 14, operation stick 15, and trigger button 16 are referred to as the operation members 11 to 16.)

In the input device 100, the front surface 10a of the operation section 10 provided with the operation members 11 to 15 is inclined forward relative to an extension direction (up-down direction) of the grip 30 (see FIG. 4). Unlike in the case of the input device 100, the front surface 10a of the operation section 10 may be parallel to the extension direction of the grip 30.

The types and number of the operation members are not limited to those in the example described herein. For example, the input device 100 may include an arrow key instead of or in addition to the operation stick 15. Additionally, the input device 100 may include, at the position of the trigger button 16, a push button that moves linearly. In yet another example, the input device 100 may include exclusively one operation member.

Additionally, the position where the operation members are disposed is not limited to the operation section 10 positioned above the grip 30. For example, the operation members may be disposed on the grip 30. As depicted in FIG. 1, a push button 37 may be disposed on the grip 30.

### [Light Emitting Section]

Additionally, the input device 100 may include a light emitting section 2 (see FIG. 1). The light emitting section 2 is shaped like, for example, a ball and disposed in an uppermost portion of the input device 100. The game machine tracks the position and size of the light emitting section 2 through a camera connected to the game machine and executes information processing related to a game on the basis of information obtained. The number of light emitting sections 2, the position and shape of the light emitting section 2, and the like are not limited to the example described herein. For example, one or more light emitting sections 2 may be disposed in such a manner as to be embedded inside a housing of the input device. Additionally, the input device 100 need not necessarily include the light emitting section 2.

### [Movement of Grip]

While the user is holding the grip 30, side surfaces of the grip 30 are in contact with a palm of the user. Here, the "side surfaces" of the grip 30 refer to surfaces surrounding a center line Lc (see FIG. 2) of the grip 30 along the up-down direction. The grip 30 is shaped generally like a square prism and includes a right side surface 30b, a left side surface 30a, a front side surface 30c, and a back side surface. The grip 30 may be a cylinder. The input device 100 is a device for the right hand, and the palm of the user contacts the right side surface 30b (see FIG. 2) of the grip 30.

The input device 100 is configured to allow the relative position between the operation section 10 and the side surfaces of the grip 30 to be changed in the lateral direction. In other words, the input device 100 is configured to allow the relative position between the operation members 11 to 16 provided on the operation section 10 and the side surfaces of the grip 30 to be changed in the lateral direction. As described above, the input device 100 is for the right hand, thus allowing a change, in the lateral direction, of the relative position between the operation members 11 to 16 provided on the operation section 10 and at least the right side surface 30b of the grip 30.

The grip 30 includes a grip main body 31 and a grip movable portion 32 (see FIG. 2). The operation section 10 is fixed to an upper portion of the grip main body 31. The grip main body 31 and the grip movable portion 32 are arranged in the lateral direction, and the grip movable portion 32 constitutes a part of the side surfaces of the grip 30. In the input device 100, the grip movable portion 32 is positioned to the right of the grip main body 31 to constitute the right side surface 30b of the grip 30. Accordingly, while the user is holding the grip 30 in the right hand, the palm contacts the grip movable portion 32.

As depicted in FIGS. 3A and 3B, the relative position between the grip movable portion 32 and the grip main body 31 can be changed in the lateral direction. The grip movable portion 32 can move between a first position where the grip movable portion 32 is in proximity to the grip main body 31 (the position of the grip movable portion 32 depicted in FIG. 3A) and a second position where the grip movable portion 32 is away from the grip main body 31 in the lateral direction (the position of the grip movable portion 32 depicted in FIG. 3B). Hereinafter, the first position is referred to as a "reduced position," and the second position is referred to as an "enlarged position." The distance between the grip movable portion 32 in the enlarged position and the grip main body 31 is greater than the distance between the grip movable portion 32 in the reduced position and the grip main body 31.

This structure of the grip 30 allows the user to adjust the relative position between the grip movable portion 32 and the operation section 10 to provide, between the grip movable portion 32 and the operation members 11 to 16, a distance compatible with the lengths of the fingers of the right hand. That is, the user can set the distance between the operation members 11 to 16 and the right side surface 30b of the grip 30 according to the lengths of the fingers of the user. Accordingly, the user can comfortably operate the buttons.

Additionally, in the input device 100, the grip main body 31 is provided with the push button 37 (see FIG. 5). The push button 37 is positioned opposite to the grip main body 31 in the lateral direction (see FIG. 5A). By adjusting the position of the grip movable portion 32, the user can set the distance between the push button 37 and the right side surface 30b of the grip 30 according to the lengths of the fingers of the user.

Note that the movement of the grip movable portion 32 need not be in the lateral direction. The grip movable portion 32 may move forward and obliquely rightward from the grip main body 31, move backward and obliquely rightward from the grip main body 31, or move downward and obliquely rightward from the grip main body 31. In other words, the grip movable portion 32 may move in a direction crossing the extension direction (up-down direction) of the grip 30 in such a manner as to change the distance between the right side surface 30b of the grip 30 and the operation members 11 to 16.

A position adjusting mechanism 35 (see FIGS. 5A and 5B) is disposed between the grip movable portion 32 and the grip main body 31 to adjust the relative position between the grip movable portion 32 and the grip main body 31. The position adjusting mechanism 35 includes a position adjustment operating section 35c (see FIG. 2) operated by the user. By operating the position adjustment operating section 35c, the user can set the position of the grip movable portion 32 to the reduced position, the enlarged position, and any position between the reduced position and the enlarged position. The position adjusting mechanism 35 will be described below in detail.

The position of the grip movable portion 32 is not limited to the example described herein. For example, the input device 100 may be a device for the left hand. In this case, the grip movable portion 32 may be positioned to the left of the grip main body 31 and constitute the left side surface 30a of the grip 30 (see FIG. 1). In still another example, the grip 30 may be shaped like a cylinder. In this case, the grip movable portion 32 may constitute a right portion (right side surface) of an outer circumferential surface of the cylinder.

### [Position and Size of Grip Movable portion]

The grip movable portion 32 is desirably positioned at least in an upper portion of the grip 30. With the grip movable portion 32 disposed as described above, by adjusting the relative position between the grip movable portion 32 and the operation section 10, a distance compatible with the lengths of the fingers can be easily provided between the grip movable portion 32 and the operation members 11 to 16. As an example, the grip movable portion 32 is positioned in an uppermost portion of the grip 30, and an upper edge 32a of the grip movable portion 32 is positioned along a lower edge 10b of the operation section 10. Additionally, the upper edge 32a of the grip movable portion 32 is higher than an upper edge 37a (see FIG. 4) of an operation button 37 provided on the grip 30.

The grip movable portion 32 extends downward from the upper edge 32a. As depicted in FIG. 4, the length of the grip movable portion 32 in the up-down direction is larger than half of the length of the grip 30 in the up-down direction. More specifically, the length of the grip movable portion 32 in the up-down direction is larger than two-thirds of the length of the grip 30 in the up-down direction.

The position and size of the grip movable portion 32 are not limited to the example described herein. The size (length) of the grip movable portion 32 may be approximately equal to or smaller than half of the length of the grip 30 in the up-down direction.

The grip movable portion 32 is curved to surround the center line Lc of the grip 30 along the up-down direction. That is, the grip movable portion 32 is curved to have an arc horizontal cross section. The grip movable portion 32 constitutes the right side surface 30b and the front side surface 30c of the grip 30. The grip movable portion 32 includes a space formed inside the grip movable portion 32 and in which components are disposed. In an example, an adjusting mechanism 35 and a vibration motor 36, which are to be described later, are disposed inside the grip movable portion 32 (see FIG. 5A).

### [Support of Grip Movable Portion]

As depicted in FIGS. 5A and 5B, the grip movable portion 32 includes, at a lower end thereof, a supported portion 32b rotatably supported. The supported portion 32b is adapted to be rotatable around a center line along a front-back direction. In an example, a shaft 33 supported at a lower end of the grip main body 31 is inserted into a hole formed in the supported portion 32b. The supported portion 32b is supported by the shaft 33 and is rotatable around the shaft 33. Therefore, the grip movable portion 32 is movable in the lateral direction around the shaft 33.

Thus, compared to a structure in which the grip movable portion 32 is translated, the configuration described above allows the support structure for the grip movable portion 32 to be simplified. Additionally, in this support structure, compared to the lower portion of the grip movable portion 32, an upper portion of the grip movable portion 32 changes positionally significantly in the lateral direction, facilitating provision of a required movable range for the grip movable portion 32. As described above, the grip movable portion 32 has a size (length) larger than half of the length of the grip 30. This also contributes to enlarging the movable range of the upper portion of the grip movable portion 32.

The support structure for the grip movable portion 32 is not limited to the example described herein. For example, the grip 30 need not include the shaft 33. In this case, a protruding portion protruding in the front-back direction may be formed at one of the lower end of the grip main body 31 and the lower end of the grip movable portion 32, whereas a recessed portion may be formed at the other of the lower end of the grip main body 31 and the lower end of the grip movable portion 32, the recessed portion holding the protruding portion in such a manner that the protruding portion is rotatable. This allows the grip movable portion 32 to move around the protruding portion.

As further another example, the grip movable portion 32 may be supported in such a manner as to be translated. That is, the grip movable portion 32 may be supported by the grip main body 31 in such a manner that both an upper end and the lower end of the grip movable portion 32 move in the lateral direction. As further another example, a supported portion 32b rotatably supported may be provided at the upper end of the grip movable portion 32. In this case, the supported portion 32b may be supported by the operation section 10 rather than by the grip main body 31.

### [Hand Holding Member]

The input device 100 includes a hand holding member configured to fix the hand of the user to the side surfaces of the grip 30. The utilization of the hand holding member allows the user to release the hold on the grip 30 during the use of the input device 100. That is, the user can open the hand holding the grip 30.

As depicted in FIG. 2, the input device 100 includes, as the hand holding member, a band 41 disposed along the grip 30 and extending in the up-down direction. The band 41 forms a gap between the band 41 and the grip 30 in which the user places the hand. The input device 100 is positioned to the right of the grip 30 and disposed along the grip movable portion 32. Therefore, the user can place the hand between the band 41 and the grip movable portion 32. As depicted in FIG. 4, in a side view of the input device 100 (that is, when the input device 100 is viewed in a direction in which the grip movable portion 32 moves), the band 41 overlaps the grip movable portion 32.

Ends of the band 41 are attached to the input device 100 at positions beyond the ends of the grip movable portion 32. This structure enables a change in the relative position between the grip movable portion 32 and the band 41 (distance between the grip movable portion 32 and the band 41).

In the input device 100, as depicted in FIG. 5A, an upper end 41a of the band 41 is attached to the operation section 10 at a position higher than the upper edge 32a of the grip movable portion 32. Additionally, a lower end 41b of the band 41 is attached to the grip main body 31 at a position lower than the lower end of the grip movable portion 32. Unlike in the case of the input device 100, an upper end 41a of the band 41 may be attached to the grip main body 31. Additionally, the lower end 41b of the band 41 may be attached to the lower end of the grip movable portion 32.

The band 41 is configured in such a manner that the length of the band 41 is adjustable. Reducing the length of the band 41 reduces the gap between the band 41 and the grip movable portion 32 to press the hand of the user against the grip movable portion 32.

Note that the structure used to fix the hand of the user to the side surfaces of the grip 30 is not limited to the example described herein. For example, the upper end 41a and lower end 41b of the band 41 may be respectively attached to the upper end and lower end of the grip movable portion 32. In further another example, as the hand holding member configured to fix the hand of the user to the side surfaces of the grip 30, the input device 100 may include, instead of the band 41, a glove in which the hand of the user can be fitted.

### [Housing]

As depicted in FIG. 5A, the grip main body 31 includes a housing 34. The housing 34 includes two housing portions 34A and 34B that are combined with each other. The two housing portions 34A and 34B are combined with each other, for example, in the lateral direction. Unlike in the case of the input device 100, the housing 34 may include two housing portions that are combined with each other in the front-back direction.

As depicted in FIG. 5A, the grip main body 31 is provided with a push button 37. The push button 37 protrudes outward from an opening formed in the housing 34. Inside the housing 34, a frame 38 and a switch 38a are disposed, the switch 38a being attached to the frame 38 and configured to detect movement of the push button 37. Inside the housing 34, various electrical components such as a circuit board and a battery may be disposed together with the frame 38.

### [Position Adjusting Mechanism]

The input device 100 includes the operation members 11 to 16 and a position adjusting mechanism 35 (see FIG. 5A) configured to adjust the relative position to the side surfaces of the grip 30. The position adjusting mechanism 35 is disposed between the grip movable portion 32 and the grip main body 31. Additionally, the position adjusting mechanism 35 includes a position adjustment operating section 35c (see FIG. 2) operated by the user. By operating the position adjustment operating section 35c, the user can set the position of the grip movable portion 32 to the reduced position, the enlarged position, and any position between the reduced position and the enlarged position.

As depicted in FIG. 5A, the input device 100 includes, as the position adjusting mechanism 35, a mechanism that converts a rotational force applied to the position adjustment operating section 35c, into movement in a straight-ahead direction of a movable member 35A, specifically, a feed screw mechanism. That is, the position adjusting mechanism 35 includes a threaded portion 35a and a nut portion 35b inside which the threaded portion 35a is fitted. One of the threaded portion 35a and the nut portion 35b is provided on the grip main body 31 side, whereas the other of the threaded portion 35a and the nut portion 35b is provided on the grip movable portion 32 side. Additionally, one of the threaded portion 35a and the nut portion 35b is formed integrally with the position adjustment operating section 35c.

As depicted in FIG. 5A, in the input device 100, the position adjusting mechanism 35 includes the movable member 35A. The movable member 35A is provided with the position adjustment operating section 35c and the threaded portion 35a. On the other hand, the nut portion 35b is formed in the housing 34 of the grip main body 31. Specifically, the nut portion 35b is formed of resin integrally with one of the housing portions 34A constituting the housing 34. This allows for a reduction in the number of components and in the number of manufacturing steps.

The position adjusting mechanism 35 is disposed in such a manner that a center line Ls (see FIG. 5A) of the threaded portion 35a and the nut portion 35b are oriented in the moving direction of the grip movable portion 32 (lateral direction). As depicted in FIG. 5B, rotation of the movable member 35A (position adjustment operating section 35c) in one direction moves the movable member 35A away from the grip main body 31, increasing the distance between the grip main body 31 and the grip movable portion 32. Additionally, rotation of the movable member 35A (position adjustment operating section 35c) in the opposite direction moves the movable member 35A closer to the grip main body 31, reducing the distance between the grip main body 31 and the grip movable portion 32 (see FIG. 5A).

The position adjusting mechanism 35 is attached to the grip main body 31 and is not attached to the grip movable portion 32. That is, the movable member 35A is not attached to an inner surface of the grip movable portion 32. Accordingly, the movable member 35A can rotate relative to the grip movable portion 32. The grip movable portion 32 may be biased toward the grip main body 31 side by an elastic member (for example, a spring). For example, a torsion spring that biases the grip movable portion 32 toward the grip main body 31 side may be attached to the shaft 33 supporting the grip movable portion 32.

The position adjustment operating section 35c is shaped like a disc extending in the radial direction of the threaded portion 35a. The grip movable portion 32 is curved to cover a front side and back side of the position adjusting mechanism 35. As depicted in FIG. 2, an outer circumferential portion of the position adjustment operating section 35c is partially exposed from the side surfaces of the grip 30. In the input device 100, the grip movable portion 32 includes an opening 32C formed to expose the outer circumferential portion of the position adjustment operating section 35c. The opening 32c is formed on the front side of the grip movable portion 32.

The grip main body 31 is provided with stopper portions 31a and 39b defining the movable range of the grip movable portion 32. The grip movable portion 32 is provided with a stopper contact portion 32f that comes into contact with the stopper portions 31a and 39b. When the grip movable portion 32 is in the enlarged position (see FIG. 5B), the stopper portion 31a comes into contact with the stopper contact portion 32f to restrict the grip movable portion 32 from moving beyond the enlarged position. When the grip movable portion 32 is in the reduced position (see FIG. 5A), the stopper portion 39b comes into contact with the stopper contact portion 32f to restrict the grip movable portion 32 from moving beyond the reduced position.

As depicted in FIG. 5A, in the input device 100, the stopper contact portion 32f protrudes upward from the upper edge 32a of the grip movable portion 32. An opening is formed in the right housing 34A of the grip main body 31 in such a manner that the stopper contact portion 32f is fitted into the opening. A right edge of the opening functions as the stopper portion 31a (see FIG. 5B). Additionally, a frame 39 is disposed inside the housing 34. A right side surface of the frame 39 functions as the stopper portion 39b (see FIG. 5A).

The structure of the position adjusting mechanism 35 is not limited to the example described herein. For example, the nut portion 35b may be formed separately from the housing portion 34A and attached to the housing portion 34A. In another example, the threaded portion 35a may be attached to the housing portion 34A, in which the nut portion 35b may be disposed on the grip movable portion 32 side. In this case, the nut portion 35b and the position adjustment operating section 35c may be formed in the movable member 35A. In further another example, the position adjusting mechanism 35 may be attached to the grip movable portion 32 rather than to the grip main body 31. That is, one of the two portions (nut portion 35b and threaded portion 35a) constituting the position adjusting mechanism 35 may be rotatably coupled to the inner surface of the grip movable portion 32, whereas the other may be attached to the housing 34 of the grip main body 31.

In further another example, the movable member 35A of the position adjusting mechanism 35 may be slidable in the up-down direction. A slope may be formed on the inner surface of the grip movable portion 32 or on the housing portion 34A of the grip main body 31 to convert movement of the movable member 35A into movement of the grip movable portion 32. In further another example, in the input device 100, a member that is pneumatically expanded or contracted may be disposed as the position adjusting mechanism 35.

### [Vibration Motor]

As depicted in FIG. 5A, the input device 100 includes the vibration motor 36 in the grip 30. The vibration motor 36 is driven by power fed from a battery not illustrated. A control apparatus (not illustrated) built into the input device 100 controls the vibration motor 36 in response to a signal transmitted from the game machine and vibrates the vibration motor 36 in response to an event or an action occurring in a game space.

The vibration motor 36 is attached to the grip movable portion 32. Accordingly, when the position of the grip movable portion 32 is moved in the lateral direction, the position of the vibration motor 36 moves correspondingly. The position of the grip movable portion 32 can be adjusted, and thus the grip movable portion 32 is easily brought into contact with the hand of the user. As a result, vibration of the vibration motor 36 is more easily transmitted to the hand of the user.

As described above, the input device 100 includes the hand holding member configured to fix the hand of the user to the side surfaces of the grip 30. Specifically, the input device 100 includes the band 41 disposed along the grip 30. As depicted in FIG. 4, when the input device 100 is viewed in the moving direction (lateral direction) of the grip movable portion 32, the band 41 overlaps the vibration motor 36. Accordingly, the hand placed between the band 41 and the grip 30 can be effectively prevented from moving off the position of the vibration motor 36. Reducing the length of the band 41 causes vibration of the vibration motor 36 to be effectively transmitted to the hand.

The vibration motor 36 is, for example, a voice coil motor. That is, the vibration motor 36 includes a coil and a magnet that can move relative to each other and controls a current flowing through the coil to reciprocate the magnet and the coil relative to each other in one direction. In the input device 100, the vibrating direction (direction of relative movement between the magnet and the coil) of the vibration motor 36 is a direction orthogonal to movement of the grip movable portion 32 (front-back direction, up-down direction, or direction oblique to the front-back direction or the up-down direction). Unlike in the case of the input device 100, the vibrating direction of the vibration motor 36 may be a direction along the movement of the grip movable portion 32 (that is, lateral direction)

Additionally, the type of the vibration motor 36 is not limited to a voice coil motor. The vibration motor 36 may be an eccentric motor. That is, the vibration motor 36 includes a rotating shaft to which a weight may be attached that has a center of gravity at a position away from the rotating center.

The vibration motor 36 is disposed between the grip movable portion 32 and the grip main body 31. As described above, the grip movable portion 32 is curved to have an arc horizontal cross section. The vibration motor 36 is attached to the inner surface of the grip movable portion 32 and covered by the grip movable portion 32. That is, the grip movable portion 32 covers a front side and a back side of the vibration motor 36.

As depicted in FIG. 5A, the width W1 of the vibration motor 36 in the lateral direction is smaller than the width W2 of the vibration motor 36 in the up-down direction. Additionally, the width W1 of the vibration motor 36 in the lateral direction is smaller than the width W3 of the vibration motor 36 in the front-back direction (see FIG. 4). Thus, a thin-type motor is used as the vibration motor 36. This facilitates housing of the vibration motor 36 in the grip movable portion 32.

As depicted in FIG. 5A, the vibration motor 36 is disposed in such a manner as to face a right side surface of the housing 34. The housing 34 includes, at a position corresponding to the vibration motor 36, a recessed portion 34b inside which the vibration motor 36 is disposed.

As described above, the position adjusting mechanism 35 is disposed between the grip movable portion 32 and the grip main body 31. As depicted in FIG. 5A, the vibration motor 36 and the position adjusting mechanism 35 are arranged in the extension direction of the grip 30, that is, in the up-down direction. This allows effective utilization of a space between the grip movable portion 32 and the grip main body 31.

In the input device 100, the position adjusting mechanism 35 is positioned above the vibration motor 36. That is, a distance from the rotating center of the supported portion 32b of the grip movable portion 32 to the position adjusting mechanism 35 is larger than a distance from the rotating center to the vibration motor 36. In this arrangement, the vibration motor 36 is disposed inside the grip movable portion 32 on a side thereof closer to the palm of the user, allowing vibration to be effectively transmitted to the palm.

### [Conclusion 1]

As described above, the input device 100 includes the grip 30 with the right side surface 30b contacted by the palm of the user, and the operation members 11 to 16 positioned above the grip 30 and configured to be operated by the fingers of the user. The relative position between the operation members 11 to 16 and the right side surface 30b of the grip 30 can be changed in the lateral direction. This structure allows the user to set the distance between the operation members 11 to 16 and the right side surface 30b of the grip 30 according to the lengths of the fingers of the user. Accordingly, the user can comfortably operate the buttons.

Note that, in the input device 100, the grip 30 includes the grip main body 31 and the grip movable portion 32, and the relative position between the grip movable portion 32 and the grip main body 31 can be moved in the lateral direction. Unlike in the case of the input device 100, the entire grip 30 may move relative to the operation section 10 in the lateral direction.

FIG. 6 is a front view depicting an example of an input device 300 with such a structure. The input device 300 includes a grip 330. In this figure, the grip 330 moved rightward is depicted by a solid line, whereas the grip 330 at an initial position is depicted by a two-dot chain line. As depicted in the figure, the entire grip 330 can be moved relative to the operation section 10 in the lateral direction. Also in this structure, the relative position between the operation members 11 to 16 and the right side surface 30b of the grip 330 relatively changes in the lateral direction. As a result, the user can set the distance between the operation members 11 to 16 and the right side surface 30b of the grip 30 according to the lengths of the fingers of the user.

In still another example, the input device 100 may be configured for the left hand. In this case, the grip movable portion 32 and the band 41 may be positioned to the left of the grip main body 31.

### [Conclusion 2]

As described above, the input device 100 includes the grip 30 with the right side surface 30b contacted by the palm of the user, and the operation members 11 to 16 configured to be operated by the fingers of the user. The grip 30 includes the grip main body 31, the grip movable portion 32 constituting the right side surface 30b of the grip 30, and the vibration motor 36 attached to the grip movable portion 32. The relative position between the grip main body 31 and the grip movable portion 32 can be changed in the lateral direction. This structure facilitates the contact of the grip movable portion 32 with the hand of the user, resulting in easier transmission of vibration of the vibration motor 36 to the hand of the user. Note that, in this structure, the direction in which the grip movable portion 32 moves is not limited to the lateral direction. The grip movable portion 32 may move relative to the grip main body 31 in the front-back direction or the up-down direction.

The structure proposed in the present disclosure is not limited to the structure of the input device 100. For example, in the input device 100, the number of grips 30 is 1. However, the structure proposed in the present disclosure may be applied to an input device including two grips located away from each other in the lateral direction.

FIG. 7 is a plan view depicting an example of an input device including two grips. An input device 200 depicted in this figure includes right and left grips 230R and 230L. Additionally, the input device 200 includes operation sections 210R and 210L in each of which a plurality of operation members is disposed, the operation sections 210R and 210L being positioned in front of the grips 230R and 230L in the extension direction thereof. An upper surface of the right operation section 210R is provided with four push buttons 211 and a push button 212 as operation members. A push button 213 is disposed on a front surface of the right operation section 210R. An upper surface of the left operation section 210L is provided with an arrow key 214 and a push button 212 as operation members. The push button 213 is also disposed on a front surface of the left operation section 210L. A central operation section 210C is provided between the right and left operation sections 210R and 210L. An upper surface of the central operation section 210C is provided with a plate-like button 215 to which a touch sensor is attached. Right and left operation sticks 216 are provided behind the plate-like button 215.

The grips 230R and 230L are each provided with a grip main body 231 connected to an operation section 210R or 210L and a grip movable portion 232 positioned outside the grip main body 231 in the lateral direction. The relative position between the grip movable portion 232 and the grip main body 231 can be changed in the lateral direction. FIG. 7 illustrates the grip movable portion 232 being moved outward from the grip main body 231 in the lateral direction. In an example, the grip movable portion 232 can be translated in the lateral direction or moved around an axis in the lateral direction. Each of the grips 230R and 230L includes a vibration motor 236 attached to an inner surface of the grip movable portion 232. This allows vibration of the vibration motor 236 to be effectively transmitted to the hand of the user.

## Claims

1. An input device comprising:
a grip including side surfaces contacted by a palm of a user when the user holds the grip; and
at least one operation member configured to be operated by the user with fingers, wherein
the grip includes a grip main body, a grip movable portion constituting a part of the side surfaces of the grip, and a vibration motor attached to the grip movable portion, and
a relative position between the grip movable portion and the grip main body is changeable.

2. The input device according to claim 1, comprising:
a hand holding member configured to fix a hand of the user to the grip movable portion.

3. The input device according to claim 2, wherein
the hand holding member is a band extending along the grip movable portion, and,
in a side view of the input device, the band overlaps the vibration motor.

4. The input device according to claim 1, wherein
the grip includes a position adjusting mechanism between the grip main body and the grip movable portion, and
the position adjusting mechanism includes a position adjustment operating section operated by the user and adjusts a relative position between the grip main body and the grip movable portion.

5. The input device according to claim 4, wherein
the grip is shaped to extend in a first direction, and
the position adjusting mechanism and the vibration motor are arranged in the first direction.

6. The input device according to claim 1, wherein
the vibration motor is disposed between the grip main body and the grip movable portion and is covered by the grip movable portion.

7. The input device according to claim 7, wherein
the grip is shaped to extend in a first direction, and
the grip movable portion is a portion positioned in a second direction crossing the first direction relative to the grip main body.

8. The input device according to claim 7, wherein
the relative position between the grip movable portion and the grip main body is changeable in the second direction.

9. The input device according to claim 1, wherein
the grip movable portion includes a first end and a second end opposite to the first end, and
the first end includes a supported portion rotatably supported.

10. The input device according to claim 1, wherein
the number of the grips provided in the input device is one.

11. The input device according to claim 1, comprising:
a right grip and a left grip as the grip.
